# EUROPÄISCHE PATENTANMELDUNG

(11) **EP 4 306 831 A1**
(43) Veröffentlichungstag der Anmeldung: **17.01.2024**
(21) Anmeldenummer: 22184772.6
(22) Anmeldetag: 13.07.2022
(51) Int. Cl.: F16K 17/04

(54) **ÜBERDRUCK-SICHERHEITSVENTIL**

(71) Anmelder: Leser GmbH & Co. KG, 20537 Hamburg (DE)
(72) Erfinder: Raeder, Dr. h.c. Thomas, 20537 Hamburg (DE)
(74) Vertreter: Patentanwälte Vollmann Hemmer Lindfeld Partnerschaft mbB

(57) **Zusammenfassung**

Die Erfindung betrifft ein Überdruck-Sicherheitsventil, welches zum Öffnen bei Überschreiten eines Druck-Maximalwertes ausgebildet ist und dazu ein längs einer Ventilachse (x) bewegliches Ventilelement (10) mit einer Druckseite (28) und einer der Druckseite (28) in Richtung der Ventilachse (x) abgewandten Auslassseite (30) aufweist, wobei das Ventilelement (10) an seiner Auslassseite (30) mit zumindest einem von dem Ventilelement (10) beabstandeten Widerstandselement (32) verbunden ist, welches in einem Strömungsweg ausgangseitig des Ventilelementes (10) gelegen ist.

## Beschreibung

Die Erfindung betrifft ein Überdruck-Sicherheitsventil, welches zum Öffnen bei Überschreiten eines Druck-Maximalwertes ausgebildet ist.

Derartige Überdruck-Sicherheitsventile werden in Maschinen und industriellen Anlagen eingesetzt, um im Falle eines zu hohen Druckes in einem Leitungs- und/oder Behältersystem das Medium in dem System, beispielsweise Gas oder Dampf, über das Sicherheitsventil kontrolliert abzulassen und den Druck zu verringern. Dazu sind federvorgespannte Ventile bekannt, bei welchen durch die Federkraft ein Druck-Maximalwert vorgegeben ist. Problematisch bei diesen Ventilen ist das Verhalten beim Öffnen, da es beim Öffnen des Ventils sowohl auf der Druckseite als auch auf der Auslassseite zu Druckänderungen kommt, welche zu einem Schwingen des Ventilelementes führen können, so dass ein schneller kontrollierter Druckabbau nicht ohne weiteres möglich ist.

Es ist Aufgabe der Erfindung, ein Überdruck-Sicherheitsventil in der Weise zu verbessern, dass es beim Öffnen ein stabileres Verhalten aufweist.

Diese Aufgabe wird durch ein Überdruck-Sicherheitsventil mit den in Anspruch 1 angegebenen Merkmalen gelöst. Bevorzugte Ausführungsformen ergeben sich aus den Unteransprüchen, der nachfolgenden Beschreibung sowie den beigefügten Figuren.

Das erfindungsgemäße Überdruck-Sicherheitsventil ist dazu ausgebildet, bei Überschreiten eines Druck-Maximalwertes an einer Druckseite des Sicherheitsventils zu öffnen. Dazu weist das Überdruck-Sicherheitsventil ein längs einer Ventilachse bewegliches Ventilelement mit einer Druckseite und einer der Druckseite in Richtung der Ventilachse abgewandten Auslassseite auf. Der auf die Druckseite des Ventilelementes wirkende Druck bewirkt ein Öffnen des Ventilelementes, wenn der Druck-Maximalwert überschritten wird, wobei dann das Medium das geöffnete Ventilelement umströmen kann und auslassseitig abgeleitet wird. Erfindungsgemäß ist das Ventilelement an seiner Auslassseite mit zumindest einem Widerstandselement verbunden. Dieses ist so angeordnet, dass es von dem Ventilelement, insbesondere dessen Auslassseite beabstandet ist. Ferner ist das Widerstandselement in einem Strömungsweg ausgangsseitig, d. h. auslassseitig des Ventilelementes gelegen. So bildet das Widerstandselement zumindest eine Oberfläche, auf welche eine Fluidströmung einwirken kann, welche an dem Ventilelement vorbeiströmt, wenn sich dieses in seiner geöffneten Stellung befindet. Die Strömung, welche das Widerstandselement beaufschlagt, erzeugt somit eine auf das Widerstandselement wirkende Kraft. Da das Widerstandselement mit dem Ventilelement verbunden ist, wirkt die Kraft auch auf das Ventilelement und kann somit dazu beitragen, dessen unerwünschtes Schwingungsverhalten zu minimieren. Besonders bevorzugt ist das Widerstandselement so angeordnet, dass die Strömung auf das Widerstandselement eine in Öffnungsrichtung des Ventilelementes wirkende Kraft erzeugt, welche somit den Öffnungsvorgang des Ventilelementes unterstützt und ein unerwünschtes Schließen aufgrund von auftretenden Schwingungen verhindert. Das Widerstandselement bildet somit eine im Strömungsweg an der Auslassseite des Ventilelementes gelegene Struktur, welche mit der austretenden Fluidströmung in Kontakt tritt und so ausgebildet ist, dass die Fluidströmung auf die Struktur einwirkt, so dass über die Struktur auf das Ventilelement eine stabilisierende, vorzugsweise ein Schwingen verringernde Kraft erzeugt wird. Durch entsprechende Ausgestaltung der Struktur, d. h. des zumindest einen Widerstandselementes, können die Größe und Richtung der durch die Fluidströmung auf das Ventilelement erzeugten Kräfte angepasst werden, um ein gewünschtes Verhalten des Ventilelementes beim Öffnen zu gewährleisten.

Das Ventilelement ist bevorzugt als Ventilteller ausgebildet, welcher mit seiner Druckseite an einem Ventilsitz dichtend in Anlage treten kann. Der Ventilsitz ist vorzugsweise eine ringförmige Anlagefläche bzw. Anlagekante, welche eine Druckleitung bzw. einen Druckbereich umgibt. Durch das am Ventilsitz anliegende Ventilelement wird dieser Druckbereich verschlossen. Der Fluiddruck im Inneren des Druckbereiches bewirkt eine Kraft auf das Ventilelement, welche beim Überschreiten des vordefinierten Druck-Maximalwertes das Ventilelement von dem Ventilsitz abhebt und so das Sicherheitsventil öffnet.

Gemäß einer weiteren bevorzugten Ausführungsform kann das Ventilelement topfförmig mit einer den Ventilsitz umgebenden Ringwandung ausgebildet sein. D. h. das Ventilelement kann als ein an einem ringförmigen Ventilsitz anliegender Ventilteller ausgebildet sein, wobei von dem Ventilteller eine Ringwandung bzw. ein Kragen in Richtung des Ventilsitzes derart vorsteht, dass er den Ventilsitz umfänglich umgibt.

Das Ventilelement ist bevorzugt federvorgespannt und wird durch die Federvorspannung in eine an dem Ventilsitz anliegende Position gezwungen. Die Federvorspannung ist dabei so eingestellt, dass die von der Federvorspannung auf das Ventilelement ausgeübte Kraft den genannten Druck-Maximalwert, bei dessen überschreiten das Ventilelement vom Ventilsitz abhebt, definiert. Die Federvorspannung kann in bekannter Weise beispielsweise durch eine Schraubenfeder aufgebracht werden, wobei die Federkraft durch Veränderung der Stauchung der Feder voreinstellbar sein kann.

Gemäß einer Ausführungsform der Erfindung weist das Ventilelement an seiner Auslassseite einen sich in Richtung der Ventilachse erstreckenden Schaft auf, welcher das zumindest eine Widerstandselement trägt. D. h. das Widerstandselement ist an dem Schaft befestigt und/oder einstückig mit diesem ausgebildet. Der Schaft kann z.B. an dem Ventilelement befestigt oder einstückig mit diesem ausgeschildert sein. Auch ein mehrstückiger Schaftaufbau oder eine andere geeignete Verbindungsstruktur zwischen Ventil- und Widerstandselement ist möglich. Der Schaft kann gleichzeitig der Führung des Ventilelementes in dessen Bewegungsrichtung entlang der Ventilachse dienen. Der Schaft bzw. eine Verbindungsstruktur dient der Kraftübertragung von dem Widerstandselement auf das Ventilelement, so dass die auf das Widerstandselement wirkenden Kräfte auf das Ventilelement übertragen werden bzw. das Widerstandselement mit dem Ventilelement ein gemeinsames System bildet.

Das zumindest eine Widerstandselement kann scheibenförmig ausgebildet sein. So kann das Widerstandselement beispielsweise scheibenförmig von einem Schaft, wie er vorangehend beschrieben wurde, in radialer Richtung vorstehen, so dass das scheibenförmige Widerstandselement eine Auskragung bildet, auf welche eine Fluidströmung oder ein Fluiddruck einwirken kann. Das scheibenförmige Widerstandselement kann dabei plan mit parallelen Oberflächen, aber auch mit gekrümmten oder gewinkelten Oberflächen ausgebildet sein.

Gemäß einer möglichen Ausführungsform weist das zumindest eine Widerstandselement zumindest eine sich gewinkelt, bevorzugt quer und weiter bevorzugt normal zu der Ventilachse erstreckende Oberfläche auf. Diese Oberfläche kann sich weiter bevorzugt im Wesentlichen parallel zu der Druckseite des Ventilelementes erstrecken. Durch Anpassung der Oberfläche des Widerstandselementes kann die Krafteinwirkung auf das Widerstandselement so optimiert werden, dass eine gewünschte zusätzliche Kraft und ein gewünschtes Schwingungsverhalten des Systems, bestehend aus Widerstandselement und Ventilelement, realisiert werden kann, bzw. unerwünschte Schwingungen bestmöglich unterbunden werden können.

Gemäß einer weiteren möglichen Ausgestaltung kann das zumindest eine Widerstandselement zumindest eine sich schräg zur Ventilachse erstreckende Oberfläche aufweisen. Dabei können sich zwei einander in Richtung der Ventilachse abgewandte Oberflächen schräg erstrecken, wobei die Oberflächen sich parallel oder auch gewinkelt zueinander erstrecken können. Auch ist es denkbar, dass sich eine Oberfläche im Wesentlichen normal zur Ventilachse und die andere Oberfläche schräg zur Ventilachse erstreckt. Auch können die Oberflächen in sich gewinkelt und/oder gewellt sein. Durch die Gestaltung der Oberflächen kann eine weitere Optimierung der Kraftangriffsflächen in einer gewünschten Weise erfolgen, um das Öffnungsverhalten des Ventilelementes in definierter Weise beeinflussen zu können.

Auch ist es möglich, dass das zumindest eine Widerstandselement zumindest eine gekrümmte Oberfläche aufweist. Auch hierüber können die effektiven Flächen in gewünschter Weise angepasst werden. Durch schräge und gekrümmte Oberflächen kann darüber hinaus der Strömungswiderstand, falls gewünscht, verringert werden oder in einer gewünschten Weise beeinflusst werden.

Gemäß einer weiteren möglichen Ausgestaltung kann das zumindest eine Widerstandselement sich in einer Richtung radial zur Ventilachse nach außen verjüngen. Dies kann beispielsweise dadurch realisiert werden, dass zwei einander abgewandten Oberflächen des Ventilelementes sich entsprechend schräg zur Ventilachse erstrecken oder in geeigneter Weise gekrümmt ausgebildet sind.

Das zumindest eine Widerstandselement kann symmetrisch zur Ventilachse ausgestaltet bzw. angeordnet sein. Alternativ ist es möglich, dass das zumindest eine Widerstandselement asymmetrisch zur Ventilachse ausgestaltet ist, bevorzugt in einem ersten Umfangsbereich in radialer Richtung bezüglich der Ventilachse weiter auskragt als in einem zweiten Umfangsbereich. Eine solche Asymmetrie kann z.B. ab eine Anpassung an die umgebende Gehäusegeometrie des Ventilgehäuses erfolgen. So ist auch das Ventilgehäuse möglicherweise asymmetrisch ausgestaltet, insbesondere wenn eine Auslassleitung sich in einer Richtung radial zur Ventilachse anschließt. Die asymmetrische Ausgestaltung des Widerstandselementes kann auf die Form des Ventilgehäuses so abgestimmt werden, dass eine Fluidströmung im Ventilgehäuse in optimaler Weise das Widerstandselement mit Kraft beaufschlagt.

Gemäß einer weiteren möglichen Ausgestaltung kann das Widerstandselement an zumindest einer Oberfläche an deren Außenumfang eine abgewinkelte Wandung bzw. einen Kragen aufweisen. Beispielsweise kann auch das Widerstandselement topfförmig ausgebildet sein, wobei die abgewinkelte Wandung einen ringförmigen Kragen bilden kann, welche vorzugsweise zum Ventilsitz hin gerichtet ist.

Erfindungsgemäß ist zumindest ein Widerstandselement angeordnet. Es ist jedoch möglich, mehrere Widerstandselemente in Richtung der Ventilachse hintereinander und beabstandet zueinander anzuordnen. Dabei müssen sich die mehreren Widerstandselemente jeweils nicht vollumfänglich um die Ventilachse erstrecken. Vielmehr ist es auch möglich, dass lediglich in zumindest einem Umfangsbereich bezüglich der Ventilachse mehrere Widerstandselemente hintereinander und beabstandet zueinander angeordnet sind, während in einem anderen Umfangsbereich lediglich ein Widerstandselement angeordnet ist. Auch eine versetzte Anordnung ist denkbar. Eine Asymmetrie ermöglicht z.B. eine Anpassung an das umgebende Ventilgehäuse, so dass die durch das Ventilgehäuse geführte Fluidströmung in gewünschter Weise auf das Widerstandselement einwirken kann und die gewünschten Kräfte auf das System aus Ventilelement und Widerstandselementen ausübt.

Gemäß einer weiteren möglichen Ausführungsform der Erfindung kann auslassseitig des Ventilelementes beabstandet zu dem Ventilsitz eine Zylinderwandung derart angeordnet sein, dass zumindest beim Öffnen des Ventils ein Widerstandselement in einen von der Zylinderwandung umgebenden Raum eintritt. Besonders bevorzugt bildet das Widerstandselement mit der Zylinderwandung eine Kolben-Zylinderanordnung, bei welcher der Fluiddruck somit vorrangig auf eine Seite des Widerstandselementes einwirkt, nämlich die dem Ventilsitz zugewandte Seite. Die zweite abgewandte Seite des Ventilelementes ist dann einem von der Zylinderwandung umschlossenen Innenraum zugewandt, in welchem vorzugsweise ein geringerer Druck herrscht, so dass durch die Druckbeaufschlagung des Widerstandselementes von einer Seite her eine zusätzliche Öffnungskraft auf das Ventilelement ausgeübt werden kann.

Nachfolgend wird die Erfindung beispielhaft anhand der beigefügten Figuren beschrieben. In diesen zeigt:
- Figur 1: schematisch ein Überdruck-Sicherheitsventil gemäß der Erfindung,
- Figur 2: schematisch eine mögliche Ausgestaltung zumindest eines Widerstandselementes,
- Figur 3: eine weitere mögliche Ausgestaltung der Widerstandselemente,
- Figur 4: eine weitere Möglichkeit der Ausgestaltung der Widerstandselemente,
- Figur 5: ein weiteres Beispiel für die Ausgestaltung zumindest eines Widerstandselementes,
- Figur 6: ein weiteres Beispiel für die Ausgestaltung zumindest eines Widerstandselementes,
- Figur 7: ein weiteres Beispiel für die Ausgestaltung zumindest eines Widerstandselementes,
- Figur 8: ein weiteres Beispiel für die Ausgestaltung zumindest eines Widerstandselementes,
- Figur 9: ein weiteres Beispiel für die Ausgestaltung zumindest eines Widerstandselementes,
- Figur 10: ein weiteres Beispiel für die Ausgestaltung zumindest eines Widerstandselementes,
- Figur 11: ein weiteres Beispiel für die Ausgestaltung zumindest eines Widerstandselementes,
- Figur 12: eine weitere mögliche Ausgestaltung der Widerstandselemente,
- Figur 13: eine weitere mögliche Ausgestaltung der Widerstandselemente,
- Figur 14: eine weitere mögliche Ausgestaltung der Widerstandselemente,
- Figur 15: eine schematische Draufsicht auf eine weitere mögliche Anordnung zumindest eines Widerstandselementes, und
- Figur 16: eine schematische Draufsicht auf eine weitere mögliche Anordnung zumindest eines Widerstandselementes.

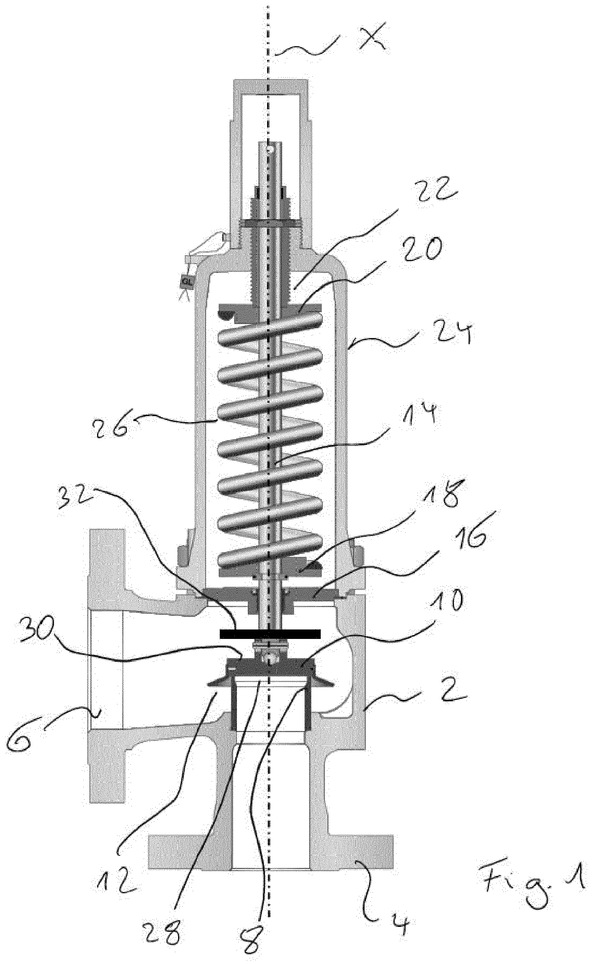

Figur 1 zeigt schematisch den Gesamtaufbau eines erfindungsgemäßen Überdruck-Sicherheitsventils, welcher im Wesentlichen einem konventionellen Aufbau eines Überdruck-Sicherheitsventiles entspricht. Das Ventilgehäuse 2 weist einen Druckstutzen 4 sowie einen Ablassstutzen 6 auf. Über den Druckstutzen 4 wird das Überdruck-Sicherheitsventil mit einer Druckleitung oder einem Druckbehälter verbunden. An den Ablassstutzen 6 kann sich eine Ablassleitung, ein Ablassbehälter oder ähnliches anschließen. Im Inneren des Ventilgehäuses 2 ist anschließend an den Druckstutzen 4 ein ringförmiger Ventilsitz 8 angeordnet, an welchem ein tellerförmiges Ventilelement 10 dichtend in Anlage gehalten wird. Das Ventilelement 10 weist einen umfänglichen Kragen 12 auf, welcher den Ventilsitz 8 umgibt. An dem Ventilelement 10 ist ein Schaft 14 befestigt, welcher in einer Führungsplatte 16 linear beweglich in Richtung der Ventilachse x geführt ist. An dem Schaft 14 ist ein erster Anlageteller 18 befestigt, sodass dieser sich gemeinsam mit dem Schaft 14 entlang Ventilachse x bewegen kann. Ein zweiter Anlageteller 20 stützt sich über eine Gewindehülse 22 an dem Federgehäuse 24 ab, welches mit dem Ventilgehäuse 2 verbunden ist. Zwischen den Anlagetellern 18 und 20 ist eine Druckfeder 26 in Gestalt einer Schraubenfeder angeordnet. Durch Verstellen der Gewindehülse 22 kann die Stauchung der Druckfeder 26 variiert werden, um den Öffnungsdruck, d.h. den Maximal-Druckwert, bei dessen überschreiten das Überdruck-Sicherheitsventil öffnen soll, eingestellt werden kann. Der Fluiddruck im Inneren des Druckstutzens 4 drückt gegen die Druckseite 28 des Ventilelementes 10. Wenn die durch diesen Druck auf das Ventilelement 10 ausgeübte Kraft die von der Druckfeder 26 erzeugte Kraft übersteigt, hebt das Ventilelement 10 von dem Ventilsitz 8 ab und das Fluid kann aus dem Druckstutzen 4 in den Ablassstutzen 6 strömen.

Nach dem Abheben des Ventilelementes 10 von dem Ventilsitz 8 verändern sich die Druckverhältnisse im Umfeld des Ventilelementes 10. Im Druckstutzen 4 verringert sich der Druck, während der Druck im Auslassstutzen 6 und insbesondere an der Auslassseite 30 des Ventilelementes zunimmt. Dies kann zu einem instabilen Öffnungszustand führen, in welchem das Ventilelement 10 in unerwünschter Weise schwingt. Um ein solches unerwünschtes Schwingen zu minimieren und den Öffnungsvorgang zu stabilisieren, ist an dem Ventilelement, von der Auslassseite in Richtung der Ventilachse x beabstandet, eine zusätzliche im Strömungsweg gelegene Struktur in Form eines Widerstandselementes 32 angeordnet. Das Widerstandselement 32 ist an dem Schaft 14 und/oder direkt an dem Ventilelement 10 befestigt, sodass es von der Auslassseite 30 des Ventilelements 10 beabstandet ist. Das Widerstandselement 32 ist in diesem Beispiel scheibenförmig ausgebildet und weist zwei sich quer zur Ventilachse x erstreckende Oberfläche auf. Das Widerstandselement 32 liegt im Inneren des Ventilgehäuses 2 in dem Strömungsweg, durch welchen eine Fluidströmung strömt, welche zwischen Ventilsitz 8 und Ventilelement 10 austritt. Eine solche Fluidströmung umströmt das Ventilelement 10 und wird somit insbesondere die der Auslassseite 30 zugewandte Oberfläche des Widerstandselementes 32 beaufschlagen, sodass über das Widerstandselement 32 diese Strömung eine Kraft auf den Schaft 14 und somit das Gesamtsystem bestehend aus Ventilelement 10 und Widerstandselement 32 ausübt. Diese Kraft hilft, den Öffnungsvorgang zu stabilisieren und unerwünschte Schwingungen zu verringern.

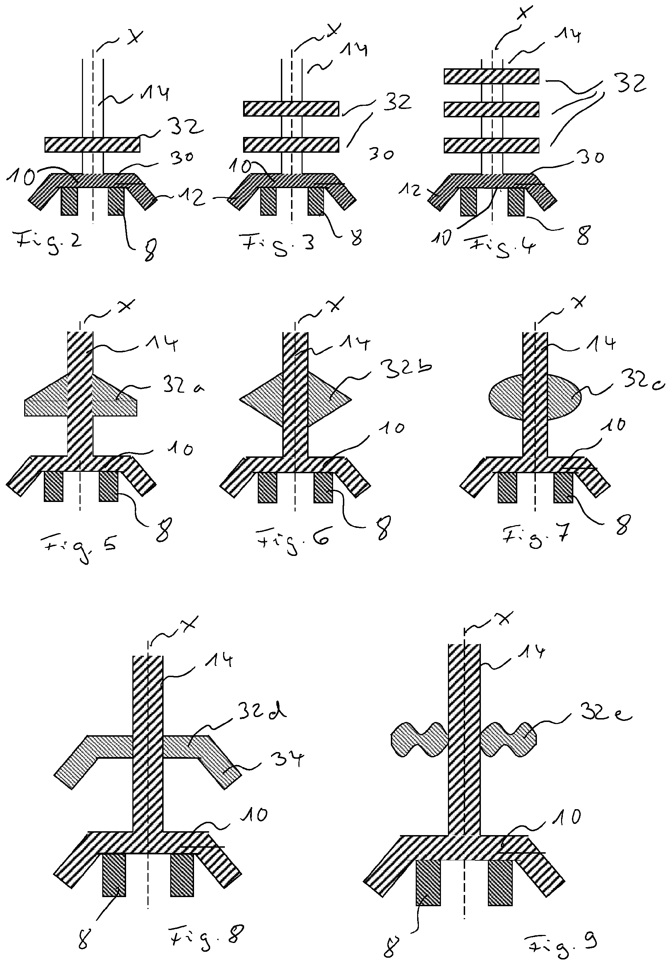

Ein solches Widerstandselement 32 oder mehrere solche Widerstandselemente 32 können in verschiedenster Weise ausgestaltet sein. Die Figuren 2 bis 16 zeigen schematisch mögliche Ausgestaltungen eines oder mehrerer Widerstandselemente, wobei dies nicht als abschließender Aufzählung zu verstehen ist.

Figur 2 zeigt im Wesentlichen die Ausgestaltung, wie sie anhand von Figur 1 beschrieben wurde. Bei der Ausgestaltung gemäß Figur 3 sind zwei Widerstandselemente 32 hintereinander und beabstandet zueinander angeordnet. Figur 4 zeigt ein Ausführungsbeispiel, bei welcher drei scheibenförmige Widerstandselemente 32 beabstandet zueinander an der Auslassseite 30 des Ventilelementes 10 angeordnet sind. Durch die Anordnung mehrerer scheibenförmige Widerstandselemente 32, wie es in Figuren 3 und 4 gezeigt ist, werden mehrere hintereinanderliegende Oberflächen geschaffen, an welchen die Fluidströmung auslassseitig des Ventilelementes 10 angreifen kann, sodass insgesamt eine größere auf den Schaft 14 in Richtung der Ventilachse x wirkende Kraft erzeugt werden kann.

Figur 5 zeigt schematisch ein andersgeformtes Widerstandselement 32a, welches an seiner dem Ventilelement 10 abgewandten Seite kegelförmig geformt ist und an seiner dem Ventilelement 10 zugewandten Seite eine sich quer zur Ventilachse x erstreckende Oberfläche aufweist, wie auch die Widerstandselemente 32 gemäß Figuren 2 bis 4. Die schräg zur Ventilachse x verlaufende Oberfläche an der den Ventilelement 10 abgewandten Seite kann eine bessere Strömungsführung bewirken.

In dem Ausführungsbeispiel gemäß Figur 6 ist auch die dem Ventilelement 10 zugewandte Oberfläche des Widerstandselementes 32b kegelförmig ausgebildet, d.h. verläuft schräg zur Ventilachse x. Das Widerstandselement 32c gemäß Figur 7 weist insgesamt eine linsenförmige Form auf, d.h. mit gekrümmten Oberflächen an seinen dem Ventilelement 10 zugewandten und dem Ventilelement abgewandten Seite, in Richtung der Ventilachse x gesehen.

In der Ausgestaltung gemäß Figur 8 ist das Widerstandselement 32d im Wesentlichen tellerförmig ausgebildet, wie in Figur 2, weist jedoch an seinem Außenumfang einen zu dem Ventilelement 10 hin abgewinkelten Kragen 34 auf. In der Ausgestaltung gemäß Figur 9 weist das Widerstandselement 32e eine Freiform mit gewellten Oberflächen auf. Durch die unterschiedlichen Oberflächengestaltungen des Widerstandselementes 32 bis 32e kann der Kraftangriff über die Fluidströmung angepasst werden, sodass insgesamt ein gewünschtes Gleichgewicht der auf das Ventilelement 10 wirkenden Kräfte realisiert werden kann, um den Öffnungsvorgang des Ventilelementes 10 zu stabilisieren.

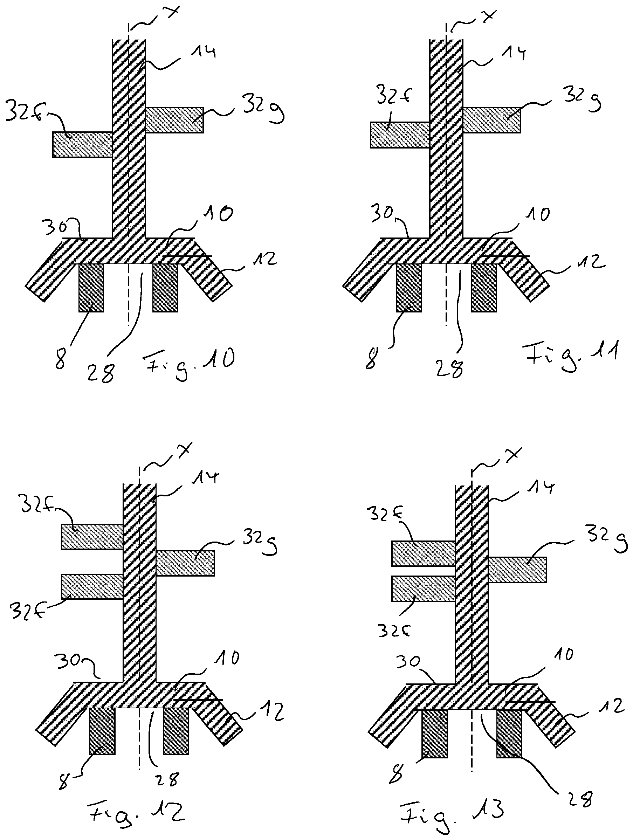

In den vorangehend beschriebenen Ausführungsbeispielen sind die Widerstandselemente 32 im Wesentlichen symmetrisch bezüglich der Ventilachse x ausgestaltet. Es ist jedoch zu verstehen, dass auch eine asymmetrische Ausgestaltung möglich ist, wie sie nachfolgend anhand der Figuren 10 bis 16 beschrieben wird. In dem Ausführungsbeispiel gemäß Figur 10 sind Widerstandselemente 32f und 32g vorgesehen, welche sich nicht ringförmig um den gesamten Umfang der Ventilachse x erstrecken, vielmehr sind sie jeweils nur an einer Seite der Ventilachse x angeordnet, d.h. einem beschränkten Umfangsbereich, und beispielsweise halbkreisförmig ausgebildet. Das Widerstandselement 32f und das Widerstandselement 32g sind dabei in Richtung der Ventilachse x versetzt zueinander angeordnet. In Figur 11 ist dieser Versatz etwas geringer ausgebildet. In den Ausführungsbeispielen gemäß Figuren 12 und 13 sind an einer Seite der Ventilachse x jeweils zwei voneinander beabstandete Widerstandselemente 32f vorgesehen, während an der diametral entgegengesetzten Seite bzw. dem entgegengesetzten Umfangsbereich jeweils nur ein Widerstandselement 32g vorgesehen ist. In dem Ausführungsbeispiel gemäß Figur 12 sind die Widerstandselemente 32f in axialer Richtung x weiter voneinander beabstandet als in dem Ausführungsbeispiel gemäß Figur 13.

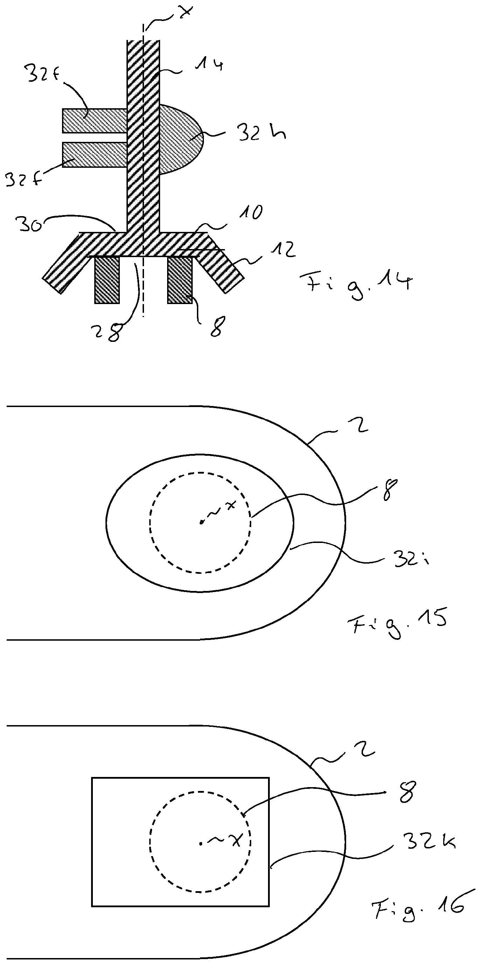

Das Ausführungsbeispiel gemäß Figur 14 ist ähnlich ausgestaltet, wie die Ausgestaltung gemäß Figur 13. Lediglich das Widerstandselement 32g ist durch ein Widerstandselement 32h mit bauchiger Form und größerer axialer Länge in Richtung der Ventilachse x ersetzt. Die Figuren 15 und 16 zeigen jeweils in einer schematischen Draufsicht weitere asymmetrische Ausgestaltungen von Widerstandselementen 32e und 32k. In dem Ausführungsbeispiel gemäß Figur 15 weist das Widerstandselement 32e eine elliptische Form auf, ist aber im Wesentlichen zentriert zur Ventilachse x angeordnet. Das Widerstandselement 32k gemäß Figur 16 weist eine rechteckige Form auf und ist seitlich versetzt zur Ventilachse x, d.h. asymmetrisch angeordnet.

All die asymmetrischen Anordnungen der Widerstandselemente 32f bis 32k gemäß Figuren 10 und 16 ermöglichen z.B. eine bessere Anpassung an das Ventilgehäuse 2 und das durch dieses definierten Strömungsweg, welcher zum Auslassstutzen 6 hin gerichtet ist. Insofern verläuft die Strömung nicht parallel zur Ventilachse x sondern auslassseitig des Ventilelementes 10 in seitlicher Richtung zum Auslassstutzen 6 hin. Durch die asymmetrische Anordnung der Widerstandselemente 32 kann dennoch eine gleichmäßige Kraftwirkung in Richtung der Ventilachse x über die Widerstandselemente 32 realisiert werden.

Es ist zu verstehen, dass all die Ausgestaltungen von Widerstandselementen 32 bis 32k, wie sie vorangehenden beschrieben wurden, auch in weiteren Abwandlungen und insbesondere auch Kombinationen realisiert werden könnten, je nach den strömungstechnischen Erfordernissen und den auftretenden Drücken.

### Bezugszeichenliste

- 2: Ventilgehäuse
- 4: Druckstutzen
- 6: Ablassstutzen
- 8: Ventilsitz
- 10: Ventilelement
- 12: Kragen
- 14: Schaft
- 16: Führungsplatte
- 18: Anlageteller
- 20: Anlageteller
- 22: Gewindehülse
- 24: Federgehäuse
- 26: Druckfeder
- 28: Druckseite
- 30: Auslassseite
- 32 (32, 32a-32k): Widerstandselemente
- 34: Kragen
- x: Ventilachse

## Patentansprüche

1. Überdruck-Sicherheitsventil, welches zum Öffnen bei Überschreiten eines Druck-Maximalwertes ausgebildet ist und dazu ein längs einer Ventilachse (x) bewegliches Ventilelement (10) mit einer Druckseite (28) und einer der Druckseite (28) in Richtung der Ventilachse (x) abgewandten Auslassseite (30) aufweist,
**dadurch gekennzeichnet, dass**
das Ventilelement (10) an seiner Auslassseite (30) mit zumindest einem von dem Ventilelement (10) beabstandeten Widerstandselement (32) verbunden ist, welches in einem Strömungsweg ausgangseitig des Ventilelementes (10) gelegen ist.

2. Überdruck-Sicherheitsventil nach Anspruch 1, **dadurch gekennzeichnet, dass** das Ventilelement (10) als Ventilteller ausgebildet ist, welcher mit seiner Druckseite (28) an einem Ventilsitz (8) dichtend in Anlage treten kann.

3. Überdruck-Sicherheitsventil nach Anspruch 1 oder 2, **dadurch gekennzeichnet, dass** das Ventilelement (10) topfförmig mit einer den Ventilsitz (8) umgebenden Ringwandung (12) ausgebildet ist.

4. Überdruck-Sicherheitsventil nach einem der vorangehenden Ansprüche, **dadurch gekennzeichnet, dass** das Ventilelement (10) federvorgespannt ist und durch die Federvorspannung in eine an dem Ventilsitz (8) anliegende Position gezwungen wird.

5. Überdruck-Sicherheitsventil nach einem der vorangehenden Ansprüche, **dadurch gekennzeichnet, dass** das Ventilelement (10) an seiner Auslassseite (30) einen sich in Richtung der Ventilachse (x) erstreckenden Schaft (14) aufweist, welcher das zumindest eine Widerstandselement (32) trägt.

6. Überdruck-Sicherheitsventil nach einem der vorangehenden Ansprüche, **dadurch gekennzeichnet, dass** das zumindest eine Widerstandselement (32) scheibenförmig ausgebildet ist.

7. Überdruck-Sicherheitsventil nach einem der vorangehenden Ansprüche, **dadurch gekennzeichnet, dass** das zumindest eine Widerstandselement (32) zumindest eine sich gewinkelt, bevorzugt quer und weiter bevorzugt normal zu der Ventilachse (x) erstreckende Oberfläche aufweist.

8. Überdruck-Sicherheitsventil nach einem der vorangehenden Ansprühe, **dadurch gekennzeichnet, dass** das zumindest eine Widerstandselement (32) zumindest eine sich schräg zur Ventilachse (x) erstreckende Oberfläche aufweist.

9. Überdruck-Sicherheitsventil nach einem der vorangehenden Ansprüche, **dadurch gekennzeichnet, dass** das zumindest eine Widerstandselement (32) zumindest eine gekrümmte Oberfläche aufweist.

10. Überdruck-Sicherheitsventil nach einem der vorangehenden Ansprüche, **dadurch gekennzeichnet, dass** das zumindest eine Widerstandselement (32) sich in einer Richtung radial zur Ventilachse (x) nach außen verjüngt.

11. Überdruck-Sicherheitsventil nach einem der vorangehenden Ansprüche, **dadurch gekennzeichnet, dass** zumindest ein Widerstandselement (32) symmetrisch zur Ventilachse (x) ausgestaltet ist.

12. Überdruck-Sicherheitsventil nach einem der vorangehenden Ansprüche, **dadurch gekennzeichnet, dass** zumindest ein Widerstandselement (32) asymmetrisch zur Ventilachse (x) ausgestaltet ist, bevorzugt in einem ersten Umfangsbereich in radialer Richtung bezüglich der Ventilachse (x) weiter auskragt als in einem zweiten Umfangsbereich.

13. Überdruck-Sicherheitsventil nach einem der vorangehenden Ansprüche, **dadurch gekennzeichnet, dass** das zumindest eine Widerstandselement (32) an zumindest einer Oberfläche an deren Außenumfang eine abgewinkelte Wandung (34) aufweist.

14. Überdruck-Sicherheitsventil nach einem der vorangehenden Ansprüche, **dadurch gekennzeichnet, dass** in zumindest einem Umfangsbereich bezüglich der Ventilachse (x) mehrere Widerstandselemente (32) in Richtung der Ventilachse (x) hintereinander und beabstandet zueinander angeordnet sind.

15. Überdruck-Sicherheitsventil nach einem der vorangehenden Ansprüche, **dadurch gekennzeichnet, dass** auslassseitig des Ventilelementes (10) beabstandet zu dem Ventilsitz (8) eine Zylinderwandung, derart angeordnet ist, dass zumindest beim Öffnen des Ventils ein Widerstandselement (32) in einen von der Zylinderwandung umgebenden Raum eintritt.
